# FASCICULE DE BREVET EUROPEEN

(11) **EP 3 317 954 B1**
(45) Date de publication et mention de la délivrance du brevet: **24.03.2021**
(21) Numéro de dépôt: 16733618.9
(22) Date de dépôt: 01.07.2016
(51) Int. Cl.: H02K 9/06

(54) **MACHINE ELECTRIQUE TOURNANTE A TURBINE A DEPRESSION AUGMENTEE**
ELEKTRISCHE DREHMASCHINE MIT EINER TURBINE MIT ERHÖHTEM UNTERDRUCK
ROTARY ELECTRIC MACHINE HAVING A TURBINE HAVING INCREASED NEGATIVE PRESSURE

(30) Priorité: 02.07.2015 FR 1556256
(43) Date de publication de la demande: 09.05.2018
(73) Titulaire: Moteurs Leroy-Somer, 16915 Angouleme Cedex 9 (FR)
(72) Inventeur: ZAHRADSKY, Vit, 78833 Hanusovice (CZ); DUTAU, Alexis, 16000 Angoulême (FR)
(74) Mandataire: Nony
(86) Numéro de dépôt international: PCT/EP2016/065537
(87) Numéro de publication internationale: WO 2017/001671

(56) Documents cités:
- WO-A1-2008/006934
- DE-A1- 10 256 805
- DE-C- 560 135
- FR-A- 1 319 228
- JP-A- 2003 219 605
- JP-U- S58 150 373
- US-B1- 6 234 767

## Description

La présente invention a pour objet une machine électrique tournante.

L'invention s'intéresse plus particulièrement, au refroidissement des machines électriques tournantes ouvertes, monophasées ou polyphasées.

On désigne par "machine électrique tournante ouverte" une machine refroidie par une circulation d'air prélevé à l'extérieur de la machine.

L'invention concerne plus particulièrement le refroidissement des machines dont le rotor comporte des enroulements avec des têtes de bobines et des parties d'enroulement parallèles à l'axe de rotation de la machine, encore appelées "parties droites", maintenues par des cales de serrage.

Il a déjà été proposé divers perfectionnements pour accroître l'efficacité du refroidissement de telles machines, notamment comme décrit dans la demande FR2940867.

Le brevet FR1319228 divulgue un ventilateur pour machine électrique. L'air est aspiré à travers des ouvertures disposées sur l'un des flasques et dirigé à travers la machine. Le ventilateur comporte des nervures de renforcement disposées sur la face extérieure de la roue mobile pour favoriser le courant d'air de retour.

Le modèle d'utilité JPS58150373 divulgue une machine comportant un rotor en deux parties et deux ventilateurs fixés respectivement sur ces deux parties. Le ventilateur situé en aval comporte deux groupes de pales.

La demande JP2003219605 divulgue une machine fermée ayant un ventilateur comportant deux paires de pales.

Le brevet DE560135 décrit une machine ayant des ouvertures sur les faces d'extrémité du carter et par lesquelles l'air est admis. La machine comporte deux ventilateurs respectivement situés à proximité de ces ouvertures qui dirigent le flux d'air vers des ouvertures de sortie situées sur la surface latérale du carter. Chacun des ventilateurs comporte des pales principales et des pales secondaires fixées sur les pales principales à l'aide des supports.

La demande DE10256805 divulgue un ventilateur à deux voiles ayant des protubérances sur le voile en amont de la direction du courant d'air.

L'invention vise à perfectionner encore les machines électriques tournantes et elle y parvient grâce à une machine électrique tournante selon la revendication 1.

Par « têtes de bobines » du stator il faut comprendre les parties des enroulements du stator qui s'étendent hors des encoches du circuit magnétique du stator, notamment les parties des enroulements qui vont d'une encoche à une autre.

L'invention permet d'accroître encore l'efficacité du refroidissement du rotor et du stator de la machine.

L'invention permet d'utiliser la rotation du rotor pour refroidir le stator, les ailettes de refroidissement générant un flux d'air qui est projeté dans la direction radiale, vers les enroulements du stator.

Selon l'invention les ailettes sont attenantes à une entrée d'air d'une partie principale du ventilateur comportant les pales principales et par laquelle l'air à travers la machine est aspiré.

De préférence, les ailettes sont disposées, dans la direction radiale de la machine, entre l'extrémité des têtes de bobines du stator et les têtes de bobines du rotor.

Selon l'invention, les ailettes viennent en recouvrement axial des têtes de bobines du stator sur une distance comprise entre 5 et 500 mm, notamment plus de 90 % de la hauteur totale d'une ailette.

Les ailettes peuvent venir en recouvrement axial de têtes de bobines du rotor, par exemple sur une distance comprise entre 0 et 80% de la hauteur des têtes de bobines du rotor. Ce recouvrement des têtes de bobines du rotor peut améliorer encore l'efficacité du ventilateur.

Le ventilateur peut être de différent type comme par exemple, centrifuge ou hélico-centrifuge.

Le ventilateur peut comporter au moins un voile. Le ventilateur est par exemple à double voile. Dans ce dernier cas, l'entrée d'air peut comporter une ouverture arrière située sur le voile en amont, par laquelle l'air est aspiré avant d'être éjecté radialement vers l'extérieur par les pales principales. Ladite ouverture est de préférence centrale.

De préférence, cette ouverture est l'unique entrée d'air du ventilateur.

Les deux voiles peuvent être reliés entre eux par des pales principales. Ces dernières peuvent être orientées de façon à générer un flux d'air éjecté dans la direction radiale vers l'extérieur.

Les ailettes peuvent se situer sur le voile en amont, de préférence à proximité de ladite ouverture arrière, par exemple les ailettes sont attenantes au bord de l'ouverture.

Le nombre d'ailettes est de préférence supérieur au nombre de pales principales. Le nombre d'ailette peut aussi être inférieur au nombre de pales.

Les ailettes peuvent se raccorder perpendiculairement au voile ou à l'un des voiles du ventilateur.

Les ailettes ont selon l'invention une dimension radiale qui décroît en éloignement du reste du ventilateur.

Selon l'invention, les ailettes ont une forme allongée dans la direction axiale de la machine. Par « forme allongée », il faut comprendre que les ailettes ont une dimension dans la direction axiale de la machine, qui est plus grande que la dimension maximale des ailettes dans la direction radiale.

Les ailettes sont de préférence moulées d'une seule pièce avec le reste du ventilateur. En variante, un anneau portant les ailettes peut être rapporté sur le reste du ventilateur.

La machine selon l'invention est de préférence une machine électrique tournante ouverte, comme par exemple un alternateur.

L'invention pourra être mieux comprise à la lecture de la description détaillée qui va suivre, d'exemples de mise en œuvre non limitatifs de celle-ci, et à l'examen du dessin annexé, sur lequel :
- la figure 1 représente, de façon schématique et en perspective, un ventilateur réalisé conformément à l'invention,
- la figure 2 représente le ventilateur de la figure 1, observé selon l'axe de rotation,
- la figure 3 représente un détail de la figure 2,
- la figure 4 est une vue partielle, de côté, du ventilateur de la figure 1,
- la figure 5 représente un détail de réalisation, et
- la figure 6 représente partiellement une machine électrique tournante équipée du ventilateur de la figure 1.

L'invention s'applique à toutes les machines électriques tournantes et plus particulièrement, mais non exclusivement, aux alternateurs.

Un alternateur comporte classiquement une partie principale et une excitatrice. Le rotor peut ainsi comporter un inducteur principal et un induit d'excitatrice, tandis que le stator comporte un induit principal et un inducteur d'excitatrice.

Le rotor, et en particulier l'inducteur principal, peut comporter un ou plusieurs paquets de tôles définissant des pôles sur lesquels sont bobinés des conducteurs. Ces derniers peuvent comporter des parties droites qui s'étendent le long de l'axe de rotation et qui sont maintenues sur le ou les paquets de tôles par des cales et des vis de serrage.

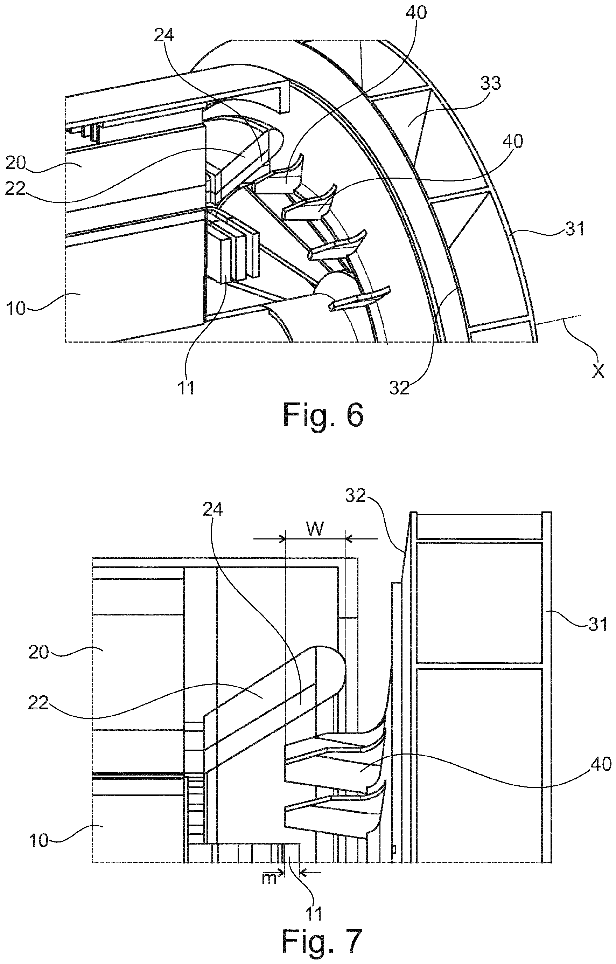

Seule une partie du rotor apparaît à la figure 6. On voit sur cette figure le paquet de tôles 10 d'un pôle du rotor et la tête de bobine 11 correspondante.

Le stator 20 comporte également un paquet de tôles qui définit un circuit magnétique avec des encoches recevant des enroulements 22. Le stator peut être à bobinage distribué ou être bobiné sur dents.

L'invention convient tout particulièrement aux stators à bobinage distribué, dans lesquels les conducteurs sont mis en vrac dans les encoches, ce type de bobinage étant encore désigné sous la terminologie anglo-saxonne "random winding". L'invention couvre aussi les machines à bobinage au stator dit « form wounded ».

L'arbre du rotor entraîne en rotation un ventilateur 30, encore appelé "turbine", qui est présent d'un côté de l'inducteur principal.

La machine électrique peut ne comporter qu'un seul ventilateur 30 ou, en variante, deux ventilateurs, à chacune des extrémités l'inducteur principal, par exemple.

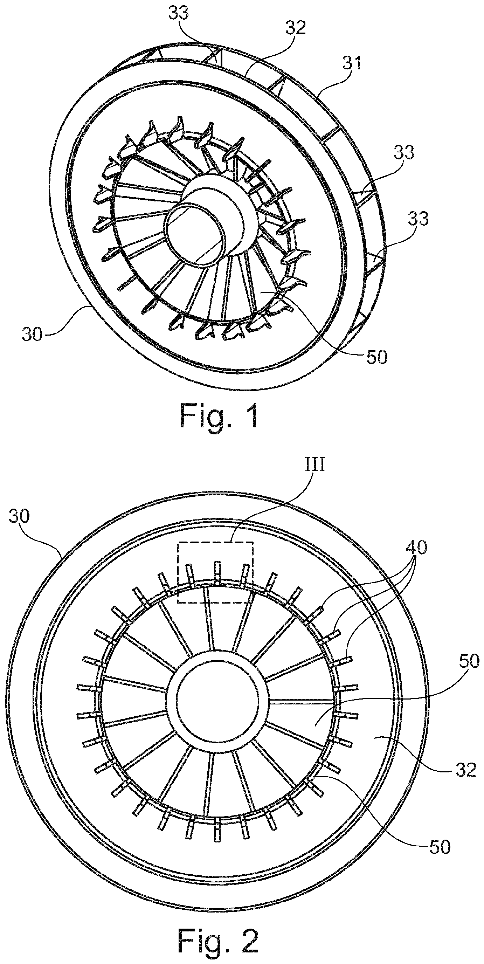

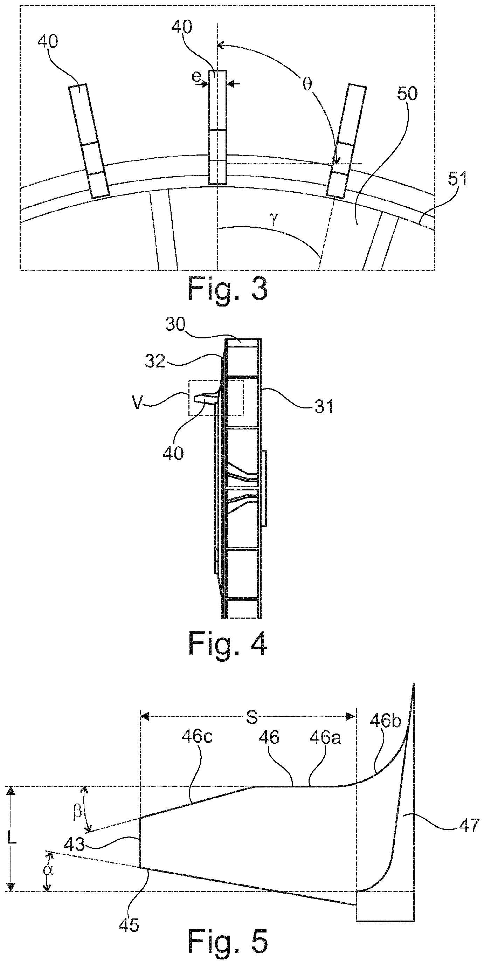

On voit sur les figures 1 et 4 notamment que le ventilateur 30 peut être à double voile, les deux voiles 31 et 32 étant reliés entre eux par des pales principales 33, orientées de façon à générer un flux d'air éjecté dans la direction radiale.

Conformément à l'invention, le ventilateur 30 comporte, du côté du voile 32 faisant face à l'inducteur principal du rotor, des ailettes de refroidissement 40, lesquelles sont par exemple réalisées d'une seule pièce de façon monobloc avec le reste du ventilateur 30, ou en variante avec une partie de support qui est rapportée sur le reste du ventilateur 30. Ces ailettes 40 sont, par exemple, comme on voit notamment à la figure 3, orientées radialement.

Si l'on se reporte à la figure 5, on voit que leur dimension radiale L peut varier entre leur base 47, par laquelle elles se raccordent au voile 32, et leur extrémité 43. Par exemple, chaque ailette 40 présente une dimension radiale L qui décroît en direction du bord 43, avec un bord radialement intérieur 45 qui fait un angle α avec l'axe de rotation X et un bord radialement extérieur 46 qui présente une portion 46a, parallèle à l'axe de rotation, qui se raccorde du côté du voile 32 par un bord concave 46b. La portion 46a se prolonge vers le bord 43 par un bord rectiligne 46c, faisant avec l'axe de rotation un angle β. On a par exemple, mais non nécessairement, β > α. La hauteur totale S de laquelle les ailettes 40 font saillie vers l'arrière, en éloignement du voile 32, est par exemple comprise entre 0 et 80 % de la distance entre le voile 32 et le paquet de tôles du stator 20, mieux 0 et 90 % de la distance entre le voile 32 et le paquet de tôles du stator 20.

La dimension radiale L des ailettes 40 est par exemple comprise entre 0 et 50 % du diamètre d'entrée du ventilateur. L'angle β vaut par exemple entre 0 et 180 ° et l'angle α entre 0 et 180 °.

Le ventilateur 30 est par exemple réalisé en matière thermoplastique ou en métal, voire par l'assemblage d'une partie en matière thermoplastique sur une partie métallique. Les ailettes 40 peuvent être réalisées avec la partie en matière thermoplastique.

Les ailettes 40 se situent, comme on peut le voir notamment à la figure 1, à proximité de l'ouverture arrière 50 du voile 32, par laquelle l'air est aspiré avant d'être éjecté radialement vers l'extérieur par les pales principales 33.

En particulier, les ailettes 40 sont, comme on le voit notamment à la figure 2, attenantes au bord de l'ouverture 50.

L'ouverture 50 est de préférence circulaire.

L'inclinaison radiale 0 des ailettes 40 par rapport à la tangente au bord 51 de l'ouverture 50, qui est de 90° sur la figure 3, peut varier.

Le nombre total d'ailettes 40 est par exemple compris entre 1 et 100.

De préférence, le nombre d'ailettes 40 est plus grand que le nombre de pales 33. Par exemple, comme illustré à la figure 2, le nombre d'ailettes 40 est deux fois plus grand que le nombre de pales 33.

Conformément à l'invention, les ailettes 40 viennent en recouvrement axial avec le stator et plus particulièrement, comme illustré à la figure 7, avec les têtes de bobines 24 de celui-ci. La distance W de recouvrement axial est comprise entre 5 et 500 mm, cette distance pouvant correspondre par exemple à plus de 90 % de la hauteur totale S d'une ailette 40. Les ailettes sont disposées, dans la direction radiale, entre l'extrémité des têtes de bobines du stator et les têtes de bobines du rotor, comme illustré à la figure 7.

Sur la figure 6, on voit que les ailettes 40 s'engagent dans l'espace radialement intérieur aux têtes de bobines 24 du stator.

On a par exemple un recouvrement axial entre les ailettes 40 et les têtes de bobines 11 du rotor sur une distance m qui est, dans l'exemple considéré, inférieure à la distance W. On a par exemple m compris entre 0 et 80 % de la distance entre le paquet de tôles du rotor 10 et l'extrémité des têtes de bobine. La forme effilée en vue de côté des ailettes 40, comme on peut le voir sur la figure 5, leur permet de s'engager entre les têtes de bobines du rotor et du stator, tout en limitant le risque d'interaction mécanique avec celles-ci lors de la rotation du rotor.

L'écart angulaire γ entre deux ailettes 40 consécutives, autour de l'axe de rotation peut être compris entre 0,1 et 180°, comme illustré à la figure 3.

L'épaisseur d'une pale *e* est par exemple comprise entre 0,1 mm et 100 mm.

Durant le fonctionnement de la machine, les ailettes 40 agissent en quelque sorte comme un ventilateur radial placé en série avec la partie principale du ventilateur formée par les pales 33 qui s'étendent entre les voiles 31 et 32. La présence des ailettes 40 permet d'accroître le flux d'air total. L'air qui est éjecté par les ailettes 40 est dirigé sur les têtes de bobines 24 du stator, et celles-ci agissent comme une sorte de déflecteur qui le renvoie sur le rotor.

Une dépression règne à l'entrée du ventilateur radial formé par les ailettes 40, permettant à la partie principale du ventilateur 30 de fonctionner avec des pertes plus faibles et une efficacité accrue.

L'air renvoyé sur le rotor possède une vitesse plus élevée dans la région des extrémités des têtes de bobines 24 du rotor, ce qui permet d'accroître le coefficient de transfert thermique et d'obtenir un refroidissement plus efficace, avec une diminution du risque de point chaud au niveau des bobinages du rotor.

L'invention n'est pas limitée à l'exemple qui vient d'être décrit.

On peut notamment modifier encore la forme et le type de ventilateur, celle du rotor ou celle du stator ou de la structure de la machine; l'invention s'applique encore par exemple à une machine à double ventilation à ventilateur radial et entrée d'air centrale, comme décrit dans le brevet EP 2274816.

## Revendications

1. Machine électrique tournante ouverte comportant un rotor et un stator, refroidie par un flux d'air créé par l'intermédiaire d'au moins un ventilateur, le ventilateur étant entrainé par un arbre principal de la machine ou par son propre système d'entrainement, ce ventilateur comportant des pales principales (33) pour créer un flux d'air de refroidissement et en amont de ces pales principales des ailettes (40) venant axialement en recouvrement au moins partiel de têtes de bobines (24) du stator, les ailettes (40) étant attenantes à une entrée d'air (50) d'une partie principale du ventilateur comportant les pales principales (33), les ailettes générant un flux d'air qui est projeté dans la direction radiale, vers les enroulements du stator, les ailettes ayant une forme allongée dans la direction axiale de la machine, les ailettes ayant une dimension dans la direction axiale de la machine, qui est plus grande que la dimension maximale des ailettes dans la direction radiale, et les ailettes ayant une dimension radiale (L) qui décroît en éloignement du reste du ventilateur et venant en recouvrement axial des têtes de bobine du stator sur une distance (W) comprise entre 5 et 500 mm.

2. Machine selon la revendication 1, les ailettes (40) venant en recouvrement axial des têtes de bobine du stator sur une distance (W) de plus de 90 % de la hauteur totale (S) d'une ailette 40.

3. Machine selon l'une quelconque des revendications précédentes, le ventilateur (30) comportant au moins un voile (31, 32).

4. Machine selon l'une quelconque des revendications précédentes, le nombre d'ailettes (40) étant supérieur au nombre de pales principales (33).

5. Machine selon la revendication 3, les ailettes (40) se raccordant perpendiculairement au voile ou à l'un (32) des voiles du ventilateur.

6. Machine selon l'une quelconque des revendications précédentes, les ailettes (40) étant moulées d'une seule pièce avec le reste du ventilateur.

7. Machine selon l'une quelconque des revendications précédentes, étant un alternateur.

8. Machine selon l'une quelconque des revendications 1 à 7, le ventilateur (30) étant à double voile, les deux voiles (31, 32) étant reliés entre eux par des pales principales (33), orientées de façon à générer un flux d'air éjecté dans la direction radiale vers l'extérieur.

9. Machine selon la revendication 8, le ventilateur étant un ventilateur hélico-centrifuge.

10. Machine selon l'une quelconque des revendications 1 à 7, la machine étant à double ventilation à ventilateur radial et entrée d'air centrale.

## Patentansprüche

1. Offene elektrische Drehmaschine, die einen Rotor und einen Stator umfasst und durch einen Luftstrom gekühlt wird, der mit Hilfe mindestens eines Lüfters erzeugt wird, wobei der Lüfter durch eine Hauptwelle der Maschine oder durch sein eigenes Antriebssystem angetrieben wird, wobei dieser Lüfter Hauptschaufeln (33) zum Erzeugen eines Kühlluftstroms und stromaufwärts dieser Hauptschaufeln Flügel (40) umfasst, die Spulenköpfe (24) des Stators mindestens teilweise axial überdecken, wobei die Flügel (40) an einen Lufteinlass (50) eines Hauptabschnitts des Lüfters, der die Hauptschaufeln (33) umfasst, angrenzen, wobei die Flügel einen Luftstrom generieren, der in radialer Richtung zu den Wicklungen des Stators hin getrieben wird, wobei die Flügel eine in der axialen Richtung der Maschine gestreckte Form aufweisen, wobei die Flügel in der axialen Richtung der Maschine eine Größe aufweisen, die größer als die maximale Größe der Flügel in der radialen Richtung ist, und wobei die Flügel eine radiale Größe (L) aufweisen, die mit zunehmendem Abstand vom Rest des Lüfters abnimmt, und die Spulenköpfe des Stators über eine Strecke (W) zwischen 5 und 500 mm axial überdecken.

2. Maschine nach Anspruch 1, wobei die Flügel (40) die Spulenköpfe des Stators über eine Strecke (W) von mehr als 90 % der Gesamthöhe (S) eines Flügels 40 axial überdecken.

3. Maschine nach einem der vorhergehenden Ansprüche, wobei der Lüfter (30) mindestens eine Abdeckung (31, 32) umfasst.

4. Maschine nach einem der vorhergehenden Ansprüche, wobei die Anzahl von Flügeln (40) größer als die Anzahl von Hauptschaufeln (33) ist.

5. Maschine nach Anspruch 3, wobei die Flügel (40) mit der Abdeckung oder mit einer (32) der Abdeckungen des Lüfters rechtwinklig verbunden sind.

6. Maschine nach einem der vorhergehenden Ansprüche, wobei die Flügel (40) einstückig mit dem Rest des Lüfters geformt sind.

7. Maschine nach einem der vorhergehenden Ansprüche, die ein Wechselstromgenerator ist.

8. Maschine nach einem der Ansprüche 1 bis 7, wobei der Lüfter (30) zwei Abdeckungen aufweist, wobei die zwei Abdeckungen (31, 32) untereinander durch Hauptschaufeln (33) verbunden sind, die so ausgerichtet sind, dass sie einen Luftstrom generieren, der in der radialen Richtung nach außen ausgestoßen wird.

9. Maschine nach Anspruch 8, wobei der Lüfter ein Helico-Zentrifugallüfter ist.

10. Maschine nach einem der Ansprüche 1 bis 7, wobei die Maschine eine doppelte Belüftung, einen Radiallüfter und einen zentralen Lufteinlass aufweist.

## Claims

1. An open rotary electric machine that comprises a rotor and a stator and is cooled by a stream of air generated by at least one fan, the fan being driven by a main shaft of the machine or by its own drive system, this fan comprising main blades (33) for generating a stream of cooling air and, upstream of these main blades, fins (40) which at least partially cover coil heads (24) of the stator in the axial direction, the fins (40) adjoining an air inlet (50) of a main part of the fan which comprises the main blades (33), the fins generating a stream of air that is directed in the radial direction towards the windings of the stator, the fins being elongate in the axial direction of the machine, the fins having a dimension in the axial direction of the machine which is greater than the maximum dimension of the fins in the radial direction, the fins having a radial dimension (L) that decreases with increasing distance from the rest of the fan and axially covering the coil heads of the stator over a distance (W) of between 5 and 500 mm.

2. The machine as claimed in claim 1, the fins (40) axially covering the coil heads of the stator over a distance (W) of more than 90% of the total height (S) of a fin 40.

3. The machine as claimed in any one of the preceding claims, the fan (30) comprising at least one shroud (31, 32).

4. The machine as claimed in any one of the preceding claims, the number of fins (40) being greater than the number of main blades (33).

5. The machine as claimed in claim 3, the fins (40) being connected perpendicularly to the shroud or to one (32) of the shrouds of the fan.

6. The machine as claimed in any one of the preceding claims, the fins (40) being molded in one piece with the rest of the fan.

7. The machine as claimed in any one of the preceding claims, being an alternator.

8. The machine as claimed in any one of claims 1 to 7, the fan (30) being of double-shroud, the two shrouds (31, 32) be connected to one another by the main blades (33), oriented so as to generate a stream of air that is ejected radially outward.

9. The machine as claimed in claim 8, the fan being helico-centrifugal.

10. The machine as claimed in any one of claims 1 to 7, the machine being double-ventilation with radial fan and central air inlet.
